# EUROPÄISCHE PATENTSCHRIFT

(11) **EP 1 956 895 B1**
(45) Veröffentlichungstag und Bekanntmachung des Hinweises auf die Patenterteilung: **18.05.2011**
(21) Anmeldenummer: 06806724.8
(22) Anmeldetag: 23.11.2006
(51) Int. Cl.: A01N 1/02

(54) **VERWENDUNG EINER ZUSAMMENSETZUNG ZUR KONSERVIERUNG VON ORGANEN UND GLIEDMASSEN**
USE OF A COMPOSITION FOR PRESERVING ORGANS AND MEMBERS
UTILISATION D'UNE COMPOSITION POUR CONSERVER DES ORGANES ET DES MEMBRES

(30) Priorität: 23.11.2005 DE 102005055811
(43) Veröffentlichungstag der Anmeldung: 20.08.2008
(73) Patentinhaber: Novaliq GmbH, 69120 Heidelberg (DE)
(72) Erfinder: MEINERT, Hasso, 89231 Neu-Ulm (DE); GÜNTHER, Bernhard, 69221 Dossenheim (DE); HIEBL, Wilfried, 89257 Illertissen (DE); THEISINGER, Bastian, 89155 Erbach (DE); BRANDHORST, Daniel, 75185 Uppsala (SE)
(74) Vertreter: Eisenführ, Speiser & Partner
(86) Internationale Anmeldenummer: PCT/EP2006/011247
(87) Internationale Veröffentlichungsnummer: WO 2007/059968

(56) Entgegenhaltungen:
- EP-A- 0 440 925
- WO-A-97/12852
- US-B1- 6 274 303
- MATSUMOTO SHINICHI ET AL: "Perfluorocarbon for organ preservation before transplantation." TRANSPLANTATION (BALTIMORE), Bd. 74, Nr. 12, 27. Dezember 2002 (2002-12-27), Seiten 1804-1809, XP002480702 ISSN: 0041-1337
- VOIGLIO ET AL: "Aerobic preservation of organs using a new perflubron /lecithin emulsion stabilized by molecular dowels" JOURNAL OF SURGICAL RESEARCH, ACADEMIC PRESS INC., SAN DIEGO, CA, US, Bd. 63, Nr. 2, 1. Januar 1996 (1996-01-01), Seiten 439-446, XP002104382 ISSN: 0022-4804

## Beschreibung

Gegenstand der Erfindung ist die Verwendung einer Zusammensetzung zur Konservierung von Organen und Gliedmaßen.

Wenn Organe oder Gliedmaßen für eine Transplantation entnommen werden, müssen sie bis zum Einsetzen so aufbewahrt werden, dass sie möglichst wenig Beeinträchtigungen und Beschädigungen erleiden. Gliedmaßen, die abgetrennt wurden und wieder angenäht werden sollen, müssen so lange, bis sie wieder in den Blutkreislauf integriert sind, geschützt aufbewahrt werden. Die Organe oder Gliedmaßen müssen vor mechanischen Beschädigungen geschützt werden, aber auch vor schädlichen Einwirkungen, die dadurch entstehen, dass sie nicht in den Blutkreislauf integriert sind. Um den Zerfalls- bzw. Verwesungsprozess zu verzögern, der eintritt, sobald die Organe oder Gliedmaßen vom Kreislaufsystem abgeschnitten sind, wurden unterschiedliche Methoden entwickelt. Eine Möglichkeit besteht darin, die Organe oder Gliedmaßen in flüssigen Perfluorcarbonen aufzubewahren. Perfluorcarbone haben den Vorteil, dass sie inert sind, d.h. dass sie mit dem Organgewebe nicht reagieren. Außerdem haben Perfluorcarbone den Vorteil, dass sie ein hohes Aufnahmevermögen für Sauerstoff haben, so dass die Organe oder Gliedmaßen bei Lagerung in Perfluorcarbonen mit Sauerstoff versorgt werden können. Dies verlängert die Überlebenszeit des Organs bzw. der Gliedmaßen. Die Verwendung der Perfluorcarbone war ein wichtiger Fortschritt in der Transplantationsmedizin.

Aus Matsumoto Shinichi Et. Al: "Perfluorocarbon for organ preservation before transplantation." TRANSPLANTATION (BALTIMORE), Bd. 74, Nr. 12, 27. Dezember 2002 (2002-12-27), Seiten 1804-1809, ISSN: 0041-1337 ist es bekannt, Perfluorcarbone für die Aufbewahrung von Organen vor ihrer Transplantation zu verwenden.

Aus EP-A-0 440 925 ist es bekannt, in Organaufbewahrungsflüssigkeiten als aktiven Bestandteil eine unverdünnte flüssige Perfluorcarbonverbindung oder eine diese mit hoher Konzentration enthaltende Emulsion zu verwenden.

Aus Voiglio Et. Al: "Aerobic preservation of organs using a new perflubron/lecithin emulsion stabilized by molecular dowels" JOURNAL OF SURGICAL RESEARCH, ACADEMIC PRESS INC., SAN DIEGO, CA, US, Bd. 63, Nr. 2, 1. Januar 1996 (1996-01-01), Seiten 439-446, ISSN: 0022-4804 ist es bekannt, bei der Aufbewahrung von Organen stabile konzentrierte Perfluorcarbon-Emulsionen als Sauerstoff liefernde Systeme zu verwenden.

Ein Nachteil bei der Verwendung von Perfluorcarbonen besteht jedoch darin, dass sie eine sehr hohe Dichte haben, die weit über der Dichte der Organe oder Gliedmaßen liegt. Aus diesem Grund schwimmen die Organe oder Gliedmaßen in der Flüssigkeit auf, statt in sie einzutauchen. Um zu bewirken, dass das Organ von Perfluorcarbonen umhüllt ist, muss eine dem Auftrieb entgegenwirkende Kraft aufgewendet werden. In der Regel geschieht dies, indem die Organe oder Gliedmaßen mit Haltevorrichtungen unter dem Perfluorcarbonspiegel gehalten werden. Nur dann ist gewährleistet, dass sie ausreichend mit Sauerstoff versorgt werden und nicht mit der für Organe oder Gliedmaßen schädlichen Umgebung in Kontakt treten. Durch die Haltevorrichtungen können jedoch Kapillarsysteme im Gewebe mechanisch beschädigt werden. Die Schädigung der Strukturen kann so weitreichend sein, dass eine Transplantation oder ein Annähen nicht mehr möglich ist.

Ein weiterer Nachteil von Perfluorcarbonen ist ihr geringes Lösungsvermögen für andere Verbindungen. Es ist daher nicht möglich, einer Konservierungslösung aus Perfluorcarbonen Wirkstoffe zuzusetzen, die eine für die Konservierung der Organe und Gliedmaßen hilfreiche Funktion übernehmen können.

Aus US-B1-6,274,303 ist es bekannt, Organe bei sehr tiefer Temperatur aufzubewahren, d.h. eine Kryokonservierung durchzuführen. Die inneren Aufbewahrungsflüssigkeiten können Perfluorcarbone und Polysiloxane enthalten. Hierfür muss allerdings das Gewebe zuerst entwässert werden, damit während des Einfrierens die Zellen nicht platzen. Die Aufbewahrung erfolgt bei der Kryokonservierung bei Temperaturen im Bereich von -100°C bis -180°C. Die Kryokonservierung eignet sich für Zellen, die gegenüber mechanischen Belastungen nicht sehr empfindlich sind, führt aber zu großen Problemen bei Organen und empfindlichen Geweben.

Die Anforderungen an eine Zusammensetzung zur Konservierung von Organen oder Gliedmaßen sind somit vielfältig.

Aufgabe der Erfindung war es daher, eine Zusammensetzung bereitzustellen, mit der Organe und Gliedmaßen in schonender Weise so aufbewahrt und konserviert werden können, dass sie möglichst wenig geschädigt werden.

Eine weitere Aufgabe war es, eine sterile Zusammensetzung bereitzustellen, die sofort einsatzbereit ist, keine Dehydratisierung des Gewebes erfordert und in einfacher Weise an die Gegebenheiten angepasst werden kann.

Eine weitere Aufgabe der Erfindung war es, eine Zusammensetzung bereit zu stellen, die es ermöglicht Substanzen zu lösen, um Organe und Gliedmaßen zu stabilisieren und schädliche Einflüsse abzuwenden.

Diese Aufgabe wird gelöst durch Verwendung einer Zusammensetzung, wie sie in Anspruch 1 definiert ist.

Überraschenderweise wurde festgestellt, dass eine Zusammensetzung, die mindestens eine bei Raumtemperatur flüssige semifluorierte Alkanverbindung, die ein semifluoriertes Alkan und/oder ein Hydrofluorether sein kann, und mindestens ein bei Raumtemperatur flüssiges Siloxan enthält, eine Möglichkeit liefert, Organe und Gliedmaßen schonend aufzubewahren, wobei diese gleichzeitig mit Sauerstoff versorgt werden können, da semifluorierte Alkanverbindungen und flüssige Siloxane ein gutes Gaslösevermögen besitzen. Darüber hinaus bietet die erfindungsgemäße Zusammensetzung die Möglichkeit, Substanzen zuzufügen, die die Konservierung von Organen und Gliedmaßen weiter verbessern.

Die erfindungsgemäße Zusammensetzung bietet außerdem den Vorteil, dass sie eine Sperrschicht um das zu konservierende Organ bzw. die Gliedmaßen bildet, die eine Kontamination der aufzubewahrenden Organe bzw. Gliedmaßen verhindert. Die Zusammensetzung selbst ist per se keimfeindlich und gut sterilisierbar.

Die erfindungsgemäßen Zusammensetzungen sind chemisch, physikalisch und physiologisch inert und untoxisch.

Gegenstand der Erfindung ist daher die Verwendung einer Zusammensetzung, die eine Kombination aus mindestens einer flüssigen semifluorierten Alkanverbindung und mindestens einem flüssigen Siloxan enthält und eine Dichte in einem Bereich von 0,8 bis 1,5 g/cm³ hat, zur Konservierung von Organen und Gliedmaßen

Semifluorierte Alkanverbindungen sind amphiphile Verbindungen mit lipophoben R_{F}-Segmenten und lipophilen R_{H}-Segmenten. Als erfindungsgemäße semifluorierte Alkanverbindungen werden sowohl semifluorierte Alkane als auch Hydrofluorether verstanden. Die Verbindungen sind aus Blöcken von perfluorierten Alkanen (R_{F}) und Blöcken von nicht fluorierten Alkanen (R_{H}) aufgebaut. Die perfluorierten und nicht fluorierten Blöcke können entweder durch eine Bindung (semifluorierte Alkane) oder über ein Sauerstoffatom (Hydrofluorether) verbunden sein. Erfindungsgemäß kommen sowohl Verbindungen in Betracht, bei denen sich fluorierte und nicht fluorierte Blöcke abwechseln als auch Verbindungen, in denen ein fluorierter Block mit einem nicht fluorierten Block verbunden ist. Geeignet sind insbesondere semifluorierte Alkane, wie sie in WO 97/12852 beschrieben werden. Es können sowohl Di-Blockverbindungen R_{F}-A-R_{H} als auch Tri-Blockverbindungen, R_{F}A-R_{H}A-R_{F} verwendet werden, wobei A jeweils unabhängig eine Bindung oder Sauerstoff bedeutet. Bevorzugt werden Di-Blockverbindungen verwendet. Die Blöcke können dabei jeweils sowohl lineare also auch verzweigte Anteile aufweisen. Die unverzweigten und semifluorierten Alkanverbindungen besitzen die Formeln

F(CF₂)ₙA(CH₂)ₘH

mit n = 1 - 20
m=3-20
wobei A eine Bindung oder Sauerstoff ist.

Die verzweigten semifluorierten Alkanverbindungen können innerhalb der Perfluoralkyl-Gruppen auch FCX-Einheiten
mit X = CF₃, C₂F₅, C₃F₇ oder C₄F₉
sowie innerhalb der Alkyl-Gruppen auch HCY-Einheiten
mit Y = CH₃, C₂H₅, C₃H₇ oder C₄H₉
enthalten.

Innerhalb einer Perfluoralkyl-Kette kann auch eine -CX₂-Gruppe, sowie innerhalb einer Alkyl-Kette auch eine -CY₂-Gruppe enthalten sein.

Endständig im Molekül kann anstelle der Perfluoralkyl-Gruppe F₃C- auch eine FCX₂- oder F₂CX-Gruppe

mit X = C₂F₅, C₃F₇ oder C₄F₉

gebunden sein und ebenso kann endständig im Molekül anstelle der AlkylGruppe H₃C- auch eine HCY₂- oder H₂CY-Grupp
mit Y = C₂H₅, C₃H₇ oder C₄H₉ gebunden sein.

Stets aber bleibt im Falle aller genannten Isomeren, d.h. linearen oder verzweigten semifluorierten Alkane die Gesamtzahl der Kohlenstoffatome im Perfluoralkyl-Teil wie vorgegeben in den Grenzen von n = 1 - 20, auch bleibt im Alkyl-Teil die Zahl der Kohlenstoffatome in den vorgegebenen Grenzen von m = 3 - 20. In einer bevorzugten Ausführungsform werden semifluorierte Alkane eingesetzt, bei denen n einen Wert von 3 bis 10 hat und m einen Wert im Bereich von 3 bis 12 hat.

Die erfindungsgemäß verwendeten semifluorierten Alkane sind bei Raumtemperatur flüssig. Sehr kurzkettige Verbindungen, die bei Raumtemperatur gasförmig sind, kommen für eine Verwendung für die erfindungsgemäße Zusammensetzung nicht in Betracht. Bevorzugt werden semifluorierte Alkane eingesetzt, deren Schmelztemperatur höher als -50°C ist.

In einer bevorzugten Ausführungsform werden die semifluorierten Alkanverbindungen in hochgereinigter Form eingesetzt. Dazu kann das in WO 93/16974 beschriebene Verfahren verwendet werden, wonach die semifluorierten Alkanverbindungen zunächst mit saurer Permanganatlösung behandelt werden und danach mit einem Gemisch aus wässriger Kaliumhydroxidlösung (4-8 n), CaO bzw. BaO und einem nukleophilen Agenz (z.B. einem sekundären Amin) bei 150 bis 180°C längere Zeit am Rückfluss erhitzt oder autoklaviert werden. Das Umsetzungsprodukt wird anschließend von der wässrigen alkalischen Phase, die ggf. noch Alkohol enthält, und der Aminphase getrennt, mehrmals nach einander mit verdünnter Mineralsäure, NaHCO₃-Lösung, destilliertem Wasser, wasserfreiem Na₂SO₄ und wasserfreiem CaCl₂ behandelt und über eine leistungsfähige Kolonne fraktioniert destilliert. Die so behandelten semifluorierten Alkane sind gemäß IR-, ¹H-NMR-, ¹⁹F-NMR-, GC/MS-Spektroskopie frei von Gruppierungen, die unter intramolekularer HF-Eliminierung zur Bildung toxischer olefinischer Nebenprodukte führen können.

Für die quantitative Bestimmung von Gruppierungen, die zur intramolekularen HF-Abspaltung oder zum Austausch einem am Kohlenstoff gebundenen Fluoratoms mittels eines nukleophilen Agens führen können, kann das in WO 93/16974 beschriebene Verfahren angewendet werden, mit dem ionisierbares Fluorid bei der Reaktion des Probenmaterials mit Hexamethylendiamin in Nonan bzw. Dekan durch mehrstündiges Erhitzen auf 120 bis 150°C nachgewiesen wird, wobei eventuell freigesetztes Fluorid mittels einer ionensensitiven Elektrode erfasst wird. Nach dem Reinigungsverfahren sollen Fluoridionen höchstens bis zu einem Anteil von 40 ppm nachweisbar sein, wobei die Erfassungsgrenze für die Fluoridkonzentration kleiner oder gleich 10⁻⁵ mol l⁻¹ ist.

Wie oben ausgeführt können erfindungsgemäß als semifluorierte Alkanverbindungen sowohl semifluorierte Alkane als auch Hydrofluorether als auch eine Kombination aus beiden eingesetzt werden. Die jeweils geeigneten Verbindungen oder Kombinationen können vom Fachmann ausgewählt werden. Es kann somit eine semifluorierte Alkanverbindung oder eine Kombination von zwei oder mehr semifluorierten Alkanverbindungen verwendet werden, wobei sowohl Kombinationen aus verschiedenen semifluorierten Alkanen, als auch Kombinationen aus verschiedenen Hydrofluorethem als auch Kombinationen aus mindestens einem semifluorierten Alkan und mindestens einem Hydrofluorether geeignet sind. Die semifluorierten Alkanverbindungen weisen ein hohes Gaslösevermögen auf und werden in Kombination mit mindestens einem flüssigen Siloxan verwendet.

Als flüssige Siloxane, die auch als Silikonöle bezeichnet werden , werden im Rahmen der vorliegenden Erfindung insbesondere solche Verbindungen bezeichnet, die aus Dialkylsiloxaneinheiten und/oder Diarylsiloxaneinheiten aufgebaut sind und bei Raumtemperatur und Körpertemperatur fließfähig sind. Die Alkylreste sind geradkettig oder verzweigt und weisen bis sechs Kohlenstoffatome auf. Die bevorzugten Alkylreste sind Methylreste. Als Arylreste werden bevorzugt Phenylreste verwendet. Sie sind chemisch, physikalisch und physiologisch inert, d.h. die reagieren weder mit Bestandteilen der Gewebe, mit denen sie in Kontakt kommen, d.h. Proteinen, Lipiden etc. noch mit weiteren in der Zusammensetzung vorhandenen Bestandteilen, wie semifluorierten Alkanen oder weiteren Zusatzstoffen.

Als Siloxane werden bevorzugt solche eingesetzt, die praktisch nicht oder nur sehr wenig vernetzt sind. Siloxane sind in vielen unterschiedlichen Varianten im Handel erhältlich und der Fachmann kann leicht das für den jeweiligen Zweck optimal geeignete auswählen. Besonders geeignet sind niedrigviskose Gemische aus Siloxanen, die im Handel erhältlich sind. Bevorzugt werden solche Siloxane verwendet, die eine Viskosität im Bereich von 0,5 bis 1000 mPas, bevorzugt 0,5 bis 500 mPas haben, wobei die Viskosität jeweils mit einem Kugelfallviskosimeter bei Raumtemperatur gemessen wird.

Für die erfindungsgemäße Zusammensetzung wird eine Kombination aus mindestens einer semifluorierten Alkanverbindung und mindestens einem Siloxan verwendet Die Komponenten werden in diesem Fall in solchen Anteilen gemischt, dass die Dichte der fertigen Zusammensetzung im gewünschten Bereich liegt. Die Komponenten - semifluorierte Alkanverbindung und Siloxan - sind normalerweise bei Raumtemperatur in jedem Verhältnis mit einander mischbar und jedes Verhältnis dieser Komponenten ist daher geeignet

Die erfindungsgemäße Zusammensetzung bleibt über einen Zeitraum von mindestens einem Jahr homogen, steril und physikalisch-chemisch stabil und entmischt sich bei einer Lagerung bei Raumtemperatur (20 bis 25°C) nicht

Die Dichte der Zusammensetzung kann durch Veränderung der Anteile der Komponenten eingestellt werden und richtet sich nach dem darin aufzubewahrenden Organ oder den jeweiligen Gliedmaßen. Bevorzugt wird die Dichte ausgewählt in Abhängigkeit des jeweils zu konservierenden Organs bzw. der jeweilig zu konservierenden Gliedmaßen. Falls ein höherer Sauerstoffbedarf gewünscht ist, wird der Anteil an semifluorierten Alkanverbindungen erhöht. Wenn der Sauerstoffbedarf geringer sein kann oder eine Dichte im unteren Bereich gewünscht ist, wird der Anteil an Siloxan erhöht .

Die Dichte wird bevorzugt organabhängig eingestellt und liegt geeigneterweise in einem Bereich von 0,8 bis 1,5, bevorzugt bei 0,9 bis 1,3 und besonders bevorzugt 1,01 bis 1,25 g/cm³.

Bevorzugt wird die Dichte der Zusammensetzung so eingestellt, dass das Organ bzw. die Gliedmaßen ohne Verwendung einer Haltevorrichtung in das Medium eintauchen, bevorzugt vollständig untertauchen und insbesondere bevorzugt in dem Medium schweben, ohne abzusinken und ohne aufzuschwimmen. Die Aufbewahrung schwebend in der Zusammensetzung ist die für das Gewebe schonenste Lagerung und vermeidet jegliche mechanische Schädigung. Damit die erfindungsgemäße Zusammensetzung als Sperrschicht wirken kann sollte bevorzugt das Organ bzw. die Gliedmaße vollständig untergetaucht sein.

Die erfindungsgemäß verwendete Zusammensetzung zeichnet sich durch ihr hohes Gaslösevermögen aus und macht es möglich, Sauerstoff für das aufzubewahrende bzw. zu konservierende Gewebe bereit zu stellen. Der Anteil an gelöstem Sauerstoff wird bevorzugt so eingestellt, dass eine ausreichende Sauerstoffversorgung gewährleistet ist. Der Sauerstoffgehalt wird bevorzugt organabhängig eingestellt, d.h. je nach Sauerstoffbedarf des jeweils zu konservierenden Gewebes. In einer bevorzugten Ausführungsform weist die Zusammensetzung bei Raumtemperatur 3 - 50 Vol.-%, bevorzugter 10 - 40 Vol.% Sauerstoff und alternativ eine Sauerstoffsättigung auf.

Aufgrund ihrer amphiphilen Struktur, dem lipophilen und dem lipophoben Anteil ist es möglich, in semifluorierten Alkanverbindungen Substanzen zu lösen, die in perfluorierten Alkanen unlöslich sind. Dies bietet auch die Möglichkeit, in der Zusammensetzung Verbindungen gelöst bereitzustellen, die die Verbesserung der Konservierung von Geweben ermöglichen. So können beispielweise Wirkstoffe, wie Antibiotika, Steroide, Entzündungshemmer, Zytostatika, oder Zusatzstoffe, die die Zusammensetzung schützen und stabilisieren, wie Antioxidantien, zugefügt werden. Die semifluorierten Alkanverbindungen dienen dabei als Lösungsvermittler, so dass auch in Mischungen aus semifluorierten Alkanverbindungen und Siloxanen Substanzen zugesetzt werden können, die in Siloxanen alleine nicht löslich sind. Als Beispiele können 5-Fluoruracil, Daunomycin, Ibuprofen, N-Acetylcystein, Karotinoide, Retinolpalmitat und α-Tocopherol genannt werden.

Der erfindungsgemäß verwendeten Zusammensetzung können weiterhin auch Nährstoffe für Organe und Gewebe zugesetzt werden, um das Organ während des Transports optimal zu versorgen. Falls die eingesetzten Wirkstoffe und Nährstoffe sich nicht in der erfindungsgemäßen Zusammensetzung lösen, können in einer weiteren Ausführungsform Colösungsmittel eingesetzt werden, die den Wirkstoff bzw. Nährstoff lösen und in der erfindungsgemäßen Zusammensetzung aus semifluorierte Alkanverbindung und Siloxan gelöst werden. Colösungsmittel, die in diesem Zusammenhang geeignet sind, sind zum Beispiel Alkohole, wie ein- und mehrwertige Alkohole mit 1 bis 6 C-Atomen, z.B. Ethanol, n-Propylalkohol, Isopropylalkohol, Butanol, Glycerin, Sorbitol, etc.. Weitere als Colösungsmittel geeignete Verbindungen sind Ether und Ester. Wasser kommt in diesem Zusammenhang nicht in Betracht, die erfindungsgemäß verwendete Zusammensetzung ist wasserfrei.

Es ist empfehlenswert, die höher viskosen anhaftenden Anteile der Konservierungsflüssigkeit von dem Gewebe vor dessen weiteren Verwendung, d.h. Transplantation oder Annähen, abzuwaschen. Hierzu ist die Verwendung von vorzugsweise hochreinen semifluorierten Alkanverbindungen aufgrund ihrer Kompatibilität mit Siloxanen besonders vorteilhaft. Es ist empfehlenswert, ab- oder adsorbierte Anteile der Konservierungsflüssigkeit von dem jeweiligen Gewebe abzuwaschen oder zu eluieren.

Erfindungsgemäß wird somit eine Zusammensetzung verwendet, die es zulässt Gewebe, insbesondere Organe oder Gliedmaßen in schonender Weise ohne mechanische Beeinträchtigung aufzubewahren und zu konservieren und gleichzeitig die Sauerstoffversorgung sicherzustellen. Die erfindungsgemäße Anwendung kann bei Raumtemperatur stattfinden und erfordert weder eine Dehydratisierung der Organe oder Gliedmaßen noch die Aufbewahrung bei sehr tiefer Temperatur. Die erfindungsgemäße Zusammensetzung ist biologisch und physiologisch verträglich und erhält die Qualität und sichert die Lebensdauer des isolierten Organs oder der isolierten Gliedmaßen.

Die erfindungsgemäß verwendete Zusammensetzung wird in an sich bekannter Weise hergestellt, indem die jeweiligen Anteile mit einander vermischt werden. Bevorzugt werden die einzelnen Komponenten in steriler Form vermischt und unter sterilen Bedingungen verarbeitet. Die entstehende Zusammensetzung ist homogen und bei Raumtemperatur physikalisch-chemisch stabil.

Siloxane haben ein gutes Gaslösevermögen, wenn auch ein etwas geringeres als semifluorierte Alkanverbindungen. Zum Vermischen werden bevorzugt Siloxane mit einer Dichte im Bereich von 0,75 bis 0,98 g/cm³ eingesetzt.

Die erfindungsgemäße Zusammensetzung wird bereitgestellt, um Organe und Gewebe schonend aufzubewahren. Da die Zusammensetzung sehr stabil ist und über lange Zeit, z.B. über einen Zeitraum von mindestens einem Jahr bei einer Umgebungstemperatur von 15 bis 42°C aufbewahrt werden kann, ist sie sehr gut dafür geeignet, für Notfälle bereitgehalten zu werden. So kann eine erfindungsgemäße Zusammensetzung, beispielsweise in Unfallwägen mitgeführt werden, um Gliedmaßen, die nach einem Unfall transportiert werden müssen, ohne großen Aufwand aufzunehmen.

Im Folgenden werden noch Beispiele angegeben, die den Gegenstand der vorliegenden Erfindung weiter erläutern sollen, wobei die Beispiele 2 und 4 die Sanerstoffsättigung von Silikonöl bzw. Perfluorhexyloctan für die erfindungsgemäße Zusammensetzung beschreiben.

### Beispiel 1

Zuvor sterilisiertes Silikonöl 1000 und zuvor sterilisiertes Perfluorhexyloctan werden in einem KGW-Isotherm-Gefäß mit IKA-Rührwerk bei Raumtemperatur unter sterilen Bedingungen vermischt. Das Verhältnis von Silikonöl 1000 zu F6H8 beträgt 69,5:30,5 (w/w). Anschließend wird bei Raumtemperatur unter sterilen Bedingungen mit einer Flussrate von 2000 ml/min Sauerstoff in die Lösung eingeleitet bis ein Sauerstoffgehalt von 30 Vol.-% erreicht ist. Die Dichte der erhaltenen Lösung ist 1,05 g/cm³. Falls es erwünscht ist, eine Zusammensetzung mit geringerer Dichte bereit zu stellen, wird der Anteil an Silikonöl 1000 erhöht. Falls es erwünscht ist, die Dichte zu erhöhen, kann der Anteil an Perfluorhexyloctan erhöht werden.

### Beispiel 2

Zuvor sterilisiertes Silikonöl 50 wird mit Sauerstoff gesättigt, indem unter sterilen Bedingungen bei Raumtemperatur mit einer Flussrate von ca. 5000 ml/min Sauerstoff bis zur vollständigen Sauerstoffsättigung eingeleitet wird.

### Beispiel 3

Zuvor sterilisiertes Silikonöl 100 und zuvor sterilisiertes Perfluorbutylhexan werden einem KGW-Isotherm-Gefäß mit IKA-Rührwerk unter sterilen Bedingungen bei Raumtemperatur vermischt. Über das Mischungsverhältnis von Silikonöl 100 zu F4H6 kann die gewünschte Viskosität und/oder Dichte eingestellt werden. Anschließend erfolgt durch Einleiten von Sauerstoff bei Raumtemperatur unter sterilen Bedingungen eine Sauerstoffanreicherung der Lösung (Flussrate 3000 ml/min) auf 15 Vol.-% .

### Beispiel 4

Zuvor sterilisiertes Perfluorhexyloctan und zuvor sterilisiertes α-Tocopherol wer den in dem KGW-Isotherm-Gefäß mit IKA-Rührwerk unter sterilen Bedingungen bei Raumtemperatur vermischt. Das Verhältnis von F6H8 zu α-Tocopherol beträgt 98:2 (w/w). Anschließend wird in die Lösung unter sterilen Bedingungen bei Raumtemperatur Sauerstoff bei einer Flussrate von 1000 ml/min eingeleitet, bis die Lösung einen Sauerstoffgehalt von 8 Vol.-% aufweist.

### Beispiel 5

Zuvor sterilisierter Ethylnonafluorobutylether und zuvor sterilisiertes Silikonöl 3 werden in den KGW-Isotherm-Gefäß mit IKA-Rührwerk unter sterilen Bedingungen bei Raumtemperatur vermischt. Über das Mischungsverhältnis von Silikonöl 3 zu Ethylnonafluorobutylether kann die gewünschte Viskosität und/oder Dichte eingestellt werden. Anschließend wird bei Raumtemperatur unter sterilen Bedingungen mit einer Flussrate von 1500 ml/min Sauerstoff in die Lösung eingeleitet, bis ein Sauerstoffgehalt von 25 Vol.-% erreicht ist.

## Patentansprüche

1. Verwendung einer wasserfreien Zusammensetzung enthaltend
a) mindestens eine flüssige semifluorierte Alkanverbindung,
wobei die semifluorierte Alkanverbindung eine Di-Blockverbindung R_{F}-A-R_{H} oder Tri-Blockverbindung R_{F}-A-R_{H}-A-R_{F} ist, in der A jeweils unabhängig eine Bindung oder Sauerstoff bedeutet und die Blöcke lineare oder verzweigte Anteile aufweisen, bei denen die unverzweigten semifluorierten Alkanverbindungen die Formeln
F(CF₂)ₙA(CH₂)ₘH
F(CF₂)ₙA(CH₂)ₘA(CF₂)ₙF mit n = 1 - 20
m=3-20,
und die verzweigten semifluorierten Alkanverbindungen innerhalb der Perfluoralkyl-Gruppen FCX-Einheiten
mit X = CF₃, C₂F₅, C₃F₇ oder C₄F₉ sowie innerhalb der Alkyl-Gruppen HCY-Einheiten
mit Y = CH₃, C₂H₅, C₃H₇ oder C₄H₉ enthalten, und
b) mindestens ein flüssiges Siloxan,
wobei die Komponenten a) und b) in solchen Anteilen vermischt werden, dass die Dichte der fertigen Zusammensetzung in einem Bereich von 0,8 bis 1,5 g/cm³ liegt,
zur Konservierung von Organen oder Gliedmaßen.

2. Verwendung einer Zusammensetzung nach Anspruch 1, bestehend aus den Komponenten a) und b).

3. Verwendung nach Anspruch 1 oder 2,
**dadurch gekennzeichnet, dass** als semifluorierte Alkanverbindung ein semifluoriertes Alkan, eine Mischung von semifluorierten Alkanen, ein Hydrofluorether, eine Mischung von Hydrofluorethern oder eine Kombination aus mindestens einem semifluorierten Alkan und mindestens einem Hydrofluorether enthalten ist.

4. Verwendung nach einem der vorhergehenden Ansprüche,
**dadurch gekennzeichnet, dass** als Siloxan eine Verbindung enthalten ist, die aus Dialkylsiloxaneinheiten und/oder Diarylsiloxaneinheiten aufgebaut ist, wobei die Alkylreste geradkettig oder verzweigt sein können und 1 - 6 Kohlenstoffatome aufweisen.

5. Verwendung nach einem der vorhergehenden Ansprüche,
**dadurch gekennzeichnet, dass** das Siloxan eine Viskosität von 0,5 bis 1000 mPas hat.

6. Verwendung nach Anspruch 5,
**dadurch gekennzeichnet, dass** das Siloxan eine Viskosität im Bereich von 0,5 bis 500 mPas hat.

7. Verwendung nach einem der vorhergehenden Ansprüche,
**dadurch gekennzeichnet, dass** das Siloxan ein Polydimethylsiloxan oder eine Mischung von Polydimethylsiloxanen ist.

8. Verwendung nach einem der vorhergehenden Ansprüche,
**dadurch gekennzeichnet, dass** die Zusammensetzung einen Sauerstoffgehalt aufweist, der dem Sauerstoffbedarf des zu konservierenden Organs oder der zu konservierenden Gliedmaßen entspricht.

9. Verwendung nach einem der vorhergehenden Ansprüche,
**dadurch gekennzeichnet, dass** die Zusammensetzung 10 bis 40 Vol.-% Sauerstoff, gemessen bei Raumtemperatur, enthält.

10. Verwendung nach einem der vorhergehenden Ansprüche,
**dadurch gekennzeichnet, dass** die Zusammensetzung mit Sauerstoff bei Raumtemperatur gesättigt ist.

11. Verwendung nach einem der vorhergehenden Ansprüche,
**dadurch gekennzeichnet, dass** die Zusammensetzung zusätzlich einen oder mehrere Wirkstoffe und/oder Nährstoffe enthält.

12. Verwendung nach Anspruch 11,
**dadurch gekennzeichnet, dass** die Zusammensetzung ein oder mehrere Antibiotika, Steroide, Entzündungshemmer, Zytostatika, Virustatica und/oder Stabilisierungsmittel enthält.

13. Verwendung nach einem der vorhergehenden Ansprüche,
**dadurch gekennzeichnet, dass** die Zusammensetzung zusätzliche Wirkstoffe wie 5-Fluoruracil, Daunomycin, Aciclovir, Ganciclovir, Ibuprofen, N-Acetylcystein, Karotinoide, Retinolpalmitat und/oder α-Tocopherol enthält.

14. Verwendung nach einem der Ansprüche 1 bis13,
**dadurch gekennzeichnet, dass** die Zusammensetzung zusätzlich mindestens ein Antioxidans enthält.

15. Verwendung nach Anspruch 14,
**dadurch gekennzeichnet, dass** die Zusammensetzung α-Tocopherol oder Retinolpalmitat enthält.

16. Verwendung nach einem der vorhergehenden Ansprüche,
**dadurch gekennzeichnet, dass** sie Vitamine, lipidhaltige Substanzen, und/oder leicht abbaubare Fette und/oder Öle enthalten.

17. Verwendung nach einem der vorhergehenden Ansprüche,
**dadurch gekennzeichnet, dass** die Zusammensetzung zusätzlich ein Colösungsmittel für einen Wirkstoff und/oder Nährstoff aufweist.

18. Verwendung nach einem der vorhergehenden Ansprüche,
**dadurch gekennzeichnet, dass** die Komponenten (a) und (b) in einem solchen Anteil enthalten sind, dass die Dichte der fertigen Zusammensetzung in einem Bereich von 0,9 bis 1,3 g/cm³ liegt.

19. Verwendung nach einem der vorhergehenden Ansprüche,
**dadurch gekennzeichnet, dass** die Komponenten (a) und (b) in einem solchen Anteil enthalten sind, dass die Dichte der fertigen Zusammensetzung in einem Bereich von 1,01 bis 1,25 g/cm³ liegt.

## Claims

1. Use of a water-free composition containing
a) at least one liquid semifluorinated alkane compound, wherein the semifluorinated alkane compound is a di-block compound R_{F}-A-R_{H} or a triblock compound R_{F}-A-R_{H}-A-R_{F} in which A respectively independently signifies a bond or oxygen and the blocks have straight or branched components, in which the unbranched semifluorinated alkane compounds are of the formulae:
F(CF₂)ₙA(CH₂)ₘH
F(CF₂)ₙA(CH₂)ₘA(CF₂)ₙF
with n = 1 - 20
m=3-20
and the branched semifluorinated alkane compounds include within the perfluoroalkyl groups FCX-units
with X = CF₃, C₂F₅, C₃F₇ or C₄F₉
and within the alkyl groups HCY-units
with Y = CH₃, C₂H₅, C₃H₇, or C₄H₉, and
b) at least one liquid siloxane, wherein the components a) and b) are mixed in such proportions that the density of the finished composition is in a range of 0.8 to 1.5 g/cm³,
for preserving organs or limbs.

2. Use of a composition according to claim 1 comprising the components a) and b).

3. Use according to claim 1 or claim 2 **characterised in that** a semifluorinated alkane, a mixture of semifluorinated alkanes, a hydrofluoroether, a mixture of hydrofluoroethers or a combination of at least one semifluorinated alkane and at least one hydrofluoroether is included as the semifluorinated alkane compound.

4. Use according to one of the preceding claims **characterised in that** a compound which is made up of dialkylsiloxane units and/or diarylsiloxane units is included as the siloxane, wherein the alkyl residues can be straight-chain or branched and have 1 - 6 carbon atoms.

5. Use according to one of the preceding claims **characterised in that** the siloxane is of a viscosity of 0.5 to 1000 mPas.

6. Use according to claim 5 **characterised in that** the siloxane is of a viscosity in the range of 0.5 to 500 mPas.

7. Use according to one of the preceding claims **characterised in that** the siloxane is a polydimethylsiloxane or a mixture of polydimethylsiloxanes.

8. Use according to one of the preceding claims **characterised in that** the composition has an oxygen content which corresponds to the oxygen demand of the organ or limbs to be preserved.

9. Use according to one of the preceding claims **characterised in that** the composition contains 10 to 40% by volume of oxygen, measured at ambient temperature.

10. Use according to one of the preceding claims **characterised in that** the composition is saturated with oxygen at ambient temperature.

11. Use according to one of the preceding claims **characterised in that** the composition additionally includes one or more active substances and/or nutrients.

12. Use according to claim 11 **characterised in that** the composition contains one or more antibiotics, steroids, anti-inflammatories, cytostatics, virustatics and/or stabilising agents.

13. Use according to one of the preceding claims **characterised in that** the composition contains additional active substances such as 5-fluoroacil, daunomycin, aciclovir, ganciclovir, ibuprofen, N-acetylcysteine, carotinoids, retinol palmitate and/or α-tocopherol.

14. Use according to one of claims 1 to 13 **characterised in that** the composition additionally contains at least one anti-oxidant.

15. Use according to claim 14 **characterised in that** the composition contains α-tocopherol or retinol palmitate.

16. Use according to one of the preceding claims **characterised in that** it contains vitamins, lipid-bearing substances and/or easily decomposable fats and/or oils.

17. Use according to one of the preceding claims **characterised in that** the composition additionally has a co-solvent for an active substance and/or nutrient.

18. Use according to one of the preceding claims **characterised in that** the components (a) and (b) are included in such a proportion that the density of the finished composition is in a range of 0.9 to 1.3 g/cm³.

19. Use according to one of the preceding claims **characterised in that** the components (a) and (b) are included in such a proportion that the density of the finished composition is in a range of 1.01 to 1.25 g/cm³.

## Revendications

1. Utilisation d'une composition anhydre contenant
a) au moins un composé alcane semi-fluoré liquide, le composé alcane semi-fluoré étant un composé à deux blocs R_{F}-A-R_{H} ou un composé à trois blocs R_{F}-A-R_{H}-A-R_{F}, dans lequel A est respectivement, indépendamment, une liaison ou un atome d'oxygène et les blocs présentent des parties linéaires ou ramifiées dans lesquelles les composés alcanes semi-fluorés non ramifiés comprennent les formules
F(CF₂)ₙA(CH₂)ₘH
F(CF₂)ₙA(CH₂)ₘA(CF₂)ₙF
où n = 1 - 20
m = 3 - 20,
et les composés alcanes semi-fluorés ramifiés comprennent au sein des groupes perfluoroalkyle, des motifs FCX
où X = CF₃, C₂F₅, C₃F₇ ou C₄F₉ et au sein des groupes alkyle, des motifs HCY
où Y = CH₃, C₂H₅, C₃H₇ ou C₄H₉, et
b) au moins un siloxane liquide,
les composants a) et b) étant mélangés en proportions telles que la densité de la composition finie soit dans un domaine de 0,8 à 1,5 g/cm³
pour la conservation d'organes ou de membres.

2. Utilisation d'une composition selon la revendication 1, comprenant les composants a) et b).

3. Utilisation selon la revendication 1 ou 2, **caractérisée en ce qu'**un alcane semi-fluoré, un mélange d'alcanes semi-fluorés, un hydrofluoro-éther, un mélange d'hydrofluoro-éthers ou une combinaison d'au moins un alcane semi-fluoré et d'au moins un hydrofluoro-éther est contenu comme composé alcane semi-fluoré.

4. Utilisation selon l'une des revendications précédentes,
**caractérisée en ce qu'**un composé qui est constitué de motifs dialkylsiloxane et/ou de motifs diarylsiloxane est contenu comme siloxane, les radicaux alkyle pouvant être linéaires ou ramifiés et présentant 1 à 6 atomes de carbone.

5. Utilisation selon l'une des revendications précédentes,
**caractérisée en ce que** le siloxane a une viscosité de 0,5 à 1000 mPa.

6. Utilisation selon la revendication 5, **caractérisée en ce que** le siloxane a une viscosité dans un domaine de 0,5 à 500 mPa.

7. Utilisation selon l'une des revendications précédentes,
**caractérisée en ce que** le siloxane est un polydiméthylsiloxane ou un mélange de polydiméthylsiloxanes.

8. Utilisation selon l'une des revendications précédentes,
**caractérisée en ce que** la composition présente une teneur en oxygène qui correspond au besoin en oxygène de l'organe à conserver ou du membre à conserver.

9. Utilisation selon l'une des revendications précédentes,
**caractérisée en ce que** la composition contient 10 à 40 % en volume d'oxygène, mesurés à température ambiante.

10. Utilisation selon l'une des revendications précédentes,
**caractérisée en ce que** la composition est saturée en oxygène à température ambiante.

11. Utilisation selon l'une des revendications précédentes,
**caractérisée en ce que** la composition contient en outre, une ou plusieurs substances actives et/ou substances nutritives.

12. Utilisation selon la revendication 11, **caractérisée en ce que** la composition contient un ou plusieurs antibiotiques, stéroïdes, inhibiteurs de l'inflammation, cytostatiques, virustatiques et/ou stabilisants.

13. Utilisation selon l'une des revendications précédentes,
**caractérisée en ce que** la composition contient en outre des substances actives telles que le 5-fluoro-uracile, la daunomycine, l'aciclovir, le ganciclovir, l'ibuprofène, la N-acétylcystéine, des carotinoïdes, le palmitate de rétinol et/ou l'α-tocophérol.

14. Utilisation selon l'une des revendications 1 à 13,
**caractérisée en ce que** la composition contient en outre au moins un anti-oxydant.

15. Utilisation selon la revendication 14, **caractérisée en ce que** la composition contient de l'α-tocophérol ou du palmitate de rétinol.

16. Utilisation selon l'une ou plusieurs des revendications précédentes,
**caractérisée en ce qu'**elles contiennent des vitamines, des substances contenant des lipides et/ou des huiles et/ou graisses facilement décomposables.

17. Utilisation selon l'une des revendications précédentes,
**caractérisée en ce que** la composition présente en outre un co-solvant pour une substance active et/ou une substance nutritive.

18. Utilisation selon l'une des revendications précédentes,
**caractérisée en ce que** les composants (a) et (b) sont contenus dans une proportion telle que la densité de la composition finie soit dans un domaine de 0,9 à 1,3 g/cm³.

19. Utilisation selon l'une des revendications précédentes,
**caractérisée en ce que** les composants (a) et (b) sont contenus en une proportion telle que la densité de la composition finie soit dans un domaine de 1,01 à 1,25 g/cm³.
